# EUROPÄISCHE PATENTSCHRIFT

(11) **EP 1 464 813 B1**
(45) Veröffentlichungstag und Bekanntmachung des Hinweises auf die Patenterteilung: **12.03.2008**
(21) Anmeldenummer: 03100895.6
(22) Anmeldetag: 04.04.2003
(51) Int. Cl.: F02D 13/02

(54) **Verfahren zum Betrieb einer Brennkraftmaschine mit zwei Einlassventilen**
Method for the operation of an internal combustion engine with two intake valves
Méthode d'opération pour moteur à combustion interne avec deux soupapes d'admission

(43) Veröffentlichungstag der Anmeldung: 06.10.2004
(73) Patentinhaber: Ford Global Technologies, LLC, Dearborn, MI 48126 (US)
(72) Erfinder: Phlips, Patrick Joseph, 50858, Koeln (DE); Kramer, Ulrich, 51427, Bergisch Gladbach (DE); Dunstheimer, Jens, 50823, Koeln (DE)
(74) Vertreter: Drömer, Hans-Carsten

(56) Entgegenhaltungen:
- EP-A- 0 640 749
- DE-A- 19 855 984
- US-A- 4 703 734
- US-A- 4 724 809
- US-A- 4 759 321
- US-A- 5 558 052

## Beschreibung

Die Erfindung betrifft ein Verfahren zum Betrieb einer Brennkraftmaschine mit einem ersten und einem zweiten Einlaßventil an einem Zylinder, welche unabhängig voneinander jeweils zwischen einem Maximalbetrieb und einem Minimalbetrieb umgeschaltet werden können. Ferner betrifft die Erfindung eine zur Durchführung eines derartigen Verfahrens eingerichtete Brennkraftmaschine.

Kraftfahrzeugmotoren mit Funkenzündung, die in der Praxis fast ausschließlich Benzin als Kraftstoff verwenden, werden überwiegend mit einer stöchiometrischen Luft-Kraftstoff-Mischung betrieben, welche eine sehr effiziente Nachbehandlung der Abgasemissionen und eine Drosselung zur Lastregelung erlaubt. Bei Teillastbetrieb eines solchen Motors treten allerdings Verluste im Kraftstoffverbrauch auf, die auf die Drosselung und den stöchiometrischen Betrieb zurückgehen. Diese Verluste können durch einen homogenen oder geschichteten Magerbetrieb mit Direktinjektion des Kraftstoffes reduziert werden, was jedoch den Nachteil hat, daß die entstehenden NOx-Emissionen des Motors nicht mit dem herkömmlichen Dreiwege-Katalysator behandelt werden können. Deshalb müssen NOx-Fallen zur Entfernung der Stickoxide eingesetzt werden, welche erheblich teurer als herkömmliche Dreiwege-Katalysatoren sind. Bei Anwendung der geschichteten Direktinjektion sind darüber hinaus auch die Systeme zur Bereitstellung von Luft, Kraftstoff, einer Abgasrückführung und einer Zündung sämtlich erheblich komplexer und daher teurer als bei einem herkömmlichen Motor. Auch bei einem alternativen, auf einer Ladedruckerhöhung beruhenden Ansatz zur Verbesserung des Kraftstoffverbrauches im stöchiometrischen Betrieb sind die Zusatzkosten für den in diesem Falle erforderlichen Turbolader mit Zwischenkühler erheblich.

Ein kostengünstigerer Ansatz zur Verbesserung der Motoreffizienz beruht auf einer variablen Ventilsteuerung, bei welcher die Öffnungsdauern, Schließzeiten und/oder der Ventilhub der Einlassventile und/oder der Auslassventile verstellt werden können. Nachfolgend soll diesbezüglich eine verhältnismäßig einfache variable Ventilsteuerung im Vordergrund stehen, welche auf einer Ventilsteuereinrichtung beruht, die zwischen zwei oder drei alternativen Nocken umschalten kann. Die Ventile können somit von der Ventilsteuereinrichtung mit zwei oder drei hinsichtlich Dauer und/oder Ventilhub unterschiedlichen Ventilöffnungsverläufen (nachfolgend kurz "Ventilprofile" genannt) betrieben werden.

In Brennkraftmaschinen, die zwei oder mehr Einlassventile pro Zylinder haben, können darüber hinaus die Einlassventile eines Zylinders jeweils mit voneinander unabhängigen variablen Ventilsteuerungen ausgestattet werden, was eine Vielzahl von Steuerungsmöglichkeiten für den Motorbetrieb ermöglicht. So ist aus der US 4 759 321 eine Ventilsteuerung bekannt, bei welcher zwei Einlaßventile mit zunehmender Motordrehzahl und Motorlast schrittweise mit immer größerem Ventilhub betrieben werden. Die jeweiligen Ventilhübe werden durch Steuernocken auf einer Welle vorgegeben, welche von einem Schrittmotor in eine gewünschte Winkelstellung gedreht werden kann. Bei Ausfall des Schrittmotors verharrt die Ventilsteuerung in dem zuletzt eingestellten Zustand.

Vor diesem Hintergrund war es Aufgabe der vorliegenden Erfindung, Mittel für einen effizienten und funktionssicheren Betrieb einer Brennkraftmaschine mit mehreren Einlassventilen pro Zylinder, die unabhängig voneinander zwischen einem Minimalbetrieb und einem Maximalbetrieb umgeschaltet werden können, bereitzustellen.

Diese Aufgabe wird durch ein Verfahren mit den Merkmalen des Anspruchs 1 sowie durch eine Brennkraftmaschine mit den Merkmalen des Anspruchs 9 gelöst.

Vorteilhafte Ausgestaltungen sind in den Unteransprüchen enthalten.

Das erfindungsgemäße Verfahren dient dem Betrieb einer Brennkraftmaschine, welche mindestens einen Zylinder mit mindestens einem ersten und einem zweiten Einlassventil aufweist. Vorzugsweise ist das erste Einlassventil in einem primären Einlasskanal, über den die Hauptmenge an Frischluft zugeführt wird, und das zweite Einlassventil in einem sekundären Einlasskanal, über den nur eine zur Verwirbelung erforderliche geringere Menge an Luft zugeführt wird, angeordnet. Die genannten Einlassventile sollen unabhängig voneinander jeweils zwischen
(a) einem Maximalbetrieb, der durch einen größeren Ventilhub und/oder eine längere Öffnungsdauer gekennzeichnet ist, und
(b) einem Minimalbetrieb, welcher durch einen kleineren Ventilhub und/oder eine kürzere Öffnungsdauer gekennzeichnet ist,
umgeschaltet werden können. Die kürzeren Ventilöffnungsdauern im Minimalbetrieb sind vorzugsweise so festgelegt, daß diese vollständig innerhalb der Ventilöffnungsdauern im zugehörigen Maximal betrieb liegen. Des Weiteren ist die Ventilöffnungsdauer im Minimalbetrieb vorzugsweise kürzer als der Ansaugtakt der Brennkraftmaschine. Das Verfahren ist dadurch gekennzeichnet, daß in einem Grundzustand das erste Einlaßventil im Maximalbetrieb und das zweite Einlaßventil im Minimalbetrieb eingesetzt wird.

Bei dem beschriebenen Verfahren kann mit der verhältnismäßig einfachen Umschaltung eines Ventilbetriebs zwischen zwei Betriebsarten (Minimalbetrieb, Maximalbetrieb) ein breites Spektrum an Steuerungsmöglichkeiten abgedeckt werden, da zwei Einlaßventile eines Zylinders unabhängig voneinander umgeschaltet werden können. Theoretisch können durch Kombination der verschiedenen Betriebsarten der beiden Einlaßventile vier unterschiedliche Betriebmodi für die Brennkraftmaschine eingestellt werden. Gemäß dem Verfahren dient dabei ein Betriebsmodus, bei welchem ein erstes der Einlaßventile im Maximalbetrieb und das andere Einlaßventil im Minimalbetrieb eingesetzt wird, als Grundzustand, welcher während der meisten Zeit des "normalen" Fahrbetriebs eines Kraftfahrzeuges, d.h. in den hauptsächlichen Drehzahl- und Lastbereichen, angenommen wird. Der Vorteil eines derartigen Grundzustandes mit einem gemischten Maximal- und Minimalbetrieb der Einlaßventile liegt darin, daß dieser einen optimalen Ausgangspunkt darstellt sowohl für eine Leistungssteigerung der Brennkraftmaschine als auch für einen Übergang zu minimalen Leistungsanforderungen, z.B. beim Leerlauf. Des Weiteren stellt der Grundzustand durch den Maximalbetrieb eines der Einlaßventile eine gewisse Mindestleistungsfähigkeit der Brennkraftmaschine zur Verfügung, welche eine sichere Funktion angeschlossener Aggregate wie etwa einer Lichtmaschine oder von Druckpumpen und somit die Steuerbarkeit der der Kraftfahrzeugfunktionen gewährleistet. Gleichzeitig wird durch den Minimalbetrieb des anderen Einlassventils ein asymmetrischer Lufteintritt und damit eine hohe Verwirbelung im Zylinder erreicht. Dies führt zu einer guten Mischung von Luft und Kraftstoff und einer guten Verbrennung. Der Grundzustand hat somit auch hinsichtlich der Kraftstoffausnutzung und der Motoreffizienz vorteilhafte Eigenschaften.

Der Grundzustand ist bei dem genannten Verfahren dadurch gekennzeichnet, dass dieser im Falle der Abwesenheit einer aktiven (d. h. Energie benötigenden) Einwirkung auf die Ventilsteuerung der Einlassventile von selbst von den Einlassventilen ausgeführt wird. Das heißt, dass es sich bei dem Grundzustand um einen Auffangzustand ("default") handelt, der bei einem eventuellen Ausfall der Ventilsteuerung automatisch angenommen wird. Aufgrund der Mischung eines Maximalbetriebs und eines Minimalbetriebs wird in dem Grund- bzw. Auffangzustand ein sicherer (wenngleich nicht in allen Betriebszuständen optimaler) Motorbetrieb gewährleistet.

Gemäß einer optionalen Ausführungsform des Verfahrens wird die Umschaltung der Einlassventile zwischen dem Minimalbetrieb und dem Maximalbetrieb durch den Druck des Motoröls bewirkt, wobei die Schaltvorgänge so erfolgen, dass bei geringem Motoröldruck unterhalb eines vorgegebenen Schwellwertes die Einlassventile im Grundzustand betrieben werden, also das erste Einlassventil im Maximalbetrieb und das zweite Einlassventil im Minimalbetrieb. Der Grundzustand wird daher automatisch immer dann angenommen, wenn der zur Verfügung stehende Motoröldruck für ein Schalten der Einlassventile nicht ausreicht, z. B. weil sich der Motor seit längerer Zeit im Leerlauf befindet, weil eine hohe Öltemperatur vorliegt, oder weil das Ölsystem eventuell gestört oder beschädigt ist. Der Maximalbetrieb des ersten Einlassventils im Grundzustand stellt in diesen Fällen eine gewisse Mindestleistfähigkeit der Brennkraftmaschine sicher, mit welcher diese mittlere Drehzahlen und Lasten ohne weiteres bewältigen kann. Insbesondere ist daher im Grundzustand aus einem Leerlaufbetrieb eine spontane Leistungssteigerung der Brennkraftmaschine möglich, wobei die gesteigerte Leistung nachträglich für eine Erhöhung des Motoröldruckes sorgt und somit die vollständige Schaltbarkeit der Ventilsteuerung sicherstellt.

Die voneinander unabhängige Umschaltbarkeit der Einlaßventile kann dazu verwendet werden, den Motor den jeweiligen Anforderungen gemäß optimal zu betreiben. Dabei können insbesondere bei einer geringen bis mittleren Motordrehzahl und einer geringen bis mittleren Motorlast beide Einlaßventile im Minimalbetrieb eingesetzt werden. Im Minimalbetrieb beider Einlaßventile sind die zugeführte Luftmenge und damit auch der zugehörige Kraftstoffverbrauch minimal. Wenn - wie vorstehend beschrieben - das Umschalten der Einlaßventile mit Hilfe des Motoröldrucks erfolgt, wird der Betriebszustand eines Minimalbetriebs beider Einlaßventile vorzugsweise nur bei einem ausreichend hohen Motoröldruck beziehungsweise bei einer nicht erhöhten Motoröltemperatur durchgeführt, damit jederzeit die Umschaltbarkeit der Einlaßventile und damit der Übergang in einen anderen Betriebszustand möglich bleibt.

Ein anderer bevorzugter Betriebsmodus der Brennkraftmaschine liegt bei hoher Motordrehzahl und/oder hoher Motorlast vor. In diesem Falle werden beide Einlaßventile im Maximalbetrieb eingesetzt, um eine möglichst große Luftmenge für die Verbrennung bereitzustellen.

Der Übergang von einem Betriebsmodus mit einer bestimmten Betriebsart der Einlaßventile zu einem anderen Betriebsmodus mit einer anderen Betriebsart der Einlaßventile erfolgt vorzugsweise so, daß immer nur eines der Einlaßventile seine Betriebsart wechselt. Auf diese Weise werden die mit dem Wechsel der Betriebsart eines Einlaßventils verbundenen Änderungen im Motorverhalten so klein wie möglich gehalten, so daß diese in möglichst geringem Maße vom Fahrer bemerkt werden beziehungsweise verhältnismäßig einfach durch andere Mechanismen wie beispielsweise eine Änderung der Drosseleinstellung oder der Kraftstoffeinspritzung kompensiert werden können. Ein derartiger Betriebsmodus-Wechsel durch Änderung der Betriebsart nur eines Einlaßventils ist insbesondere in der Kette der vorstehend beschriebenen Betriebsmodi (beide Einlaßventile im Minimalbetrieb; Grundzustand; beide Einlaßventile im Maximalbetrieb) verwirklicht.

Der Ventilhub und/oder die Ventilöffnungsdauer des ersten Einlaßventils im Minimalbetrieb ist vorzugsweise kleiner als die entsprechende Größe beim zweiten Einlaßventil im Minimalbetrieb. Insbesondere kann der maximale Ventilhub des ersten Einlaßventils im Minimalbetrieb weniger als 40%, vorzugsweise weniger als ein Drittel des maximalen Ventilhubs des zweiten Einlaßventils im Minimalbetrieb betragen. Dadurch wird erreicht, daß im Minimalbetrieb beider Einlaßventile die meiste Luft durch das zweite Einlaßventil eingesaugt wird, was aufgrund der Asymmetrie für eine hohe Verwirbelung im Zylinder sorgt.

Der Ventilhub des zweiten Einlaßventils im Minimalbetrieb beträgt vorzugsweise weniger als 40%, besonders bevorzugt weniger als ein Drittel des Ventilhubs des ersten Einlaßventils im Maximalbetrieb. Während des Grundzustandes fließt somit der überwiegende Anteil der Einlaßluft durch das erste Einlaßventil mit einem verhältnismäßig geringen Strömungswiderstand. Durch das zweite Einlaßventil fließt dagegen erheblich weniger Luft, wobei die entsprechende Menge jedoch vorteilhafterweise eine Verwirbelung im Zylinder bewirkt.

Die Erfindung betrifft ferner eine Brennkraftmaschine, welche die folgenden Komponenten enthält:
a) Mindestens einen Zylinder mit mindestens zwei Einlaßventilen.
b) Eine variable Ventilsteuereinrichtung, welche die Einlaßventile unabhängig voneinander zwischen (a) einem Maximalbetrieb mit größerem Ventilhub und/oder einer längeren Öffnungsdauer sowie (b) einem Minimalbetrieb mit kleinerem Ventilhub und/oder einer kleineren Öffnungsdauer umschalten kann. Die Ventilsteuereinrichtung kann insbesondere eine Nockenwelle mit unterschiedlichen Einlaßnocken für den Minimalbetrieb und den Maximalbetrieb enthalten, zwischen denen umgeschaltet werden kann.
c) Eine Motorsteuerung, welche mit der Ventilsteuereinrichtung verbunden und dazu eingerichtet ist, die Brennkraftmaschine gemäß einem Verfahren der oben erläuterten Art zu betreiben. D. h., daß in einem Grundzustand das erste Einlaßventil im Maximalbetrieb und das zweite Einlaßventil im Minimalbetrieb eingesetzt wird. Die Brennkraftmaschine beziehungsweise die Motorsteuerung kann so weitergebildet werden, daß diese auch die Varianten des genannten Verfahrens verwirklichen kann.

Gemäß einer bevorzugten Weiterbildung der Brennkraftmaschine ist die Ventilsteuereinrichtung mit dem Motorölsystem der Brennkraftmaschine verbunden und dahingehend ausgebildet, die Einlaßventile durch eine wahlweise Beaufschlagung mit einem Motoröldruck umzuschalten. Die Verwendung des Motoröldrucks für Schaltzwecke hat den Vorteil, daß auf bekannte hydraulische Methoden zurückgegriffen werden kann. Vorzugsweise ist die Ventilsteuereinrichtung weiterhin dazu eingerichtet, das erste Einlaßventil im Maximalbetrieb und das zweite Einlaßventil im Minimalbetrieb zu betreiben, wenn der Motoröldruck unterhalb eines vorgegebenen Schwelldruckes liegt. Diese Einstellung stellt somit einen Auffangzustand dar, der angenommen wird, wenn der Motoröldruck aus irgendwelchen Gründen nicht für einen Umschaltbetrieb ausreicht.

Im Folgenden wird die Erfindung mit Hilfe der Figuren beispielhaft näher erläutert.

Es zeigen:
- Fig. 1: den Ventilhub über dem Kurbelwellenwinkel für die Einlaßventile und Auslaßventile einer Brennkraftmaschine bei einer Umschaltmöglichkeit der Einlaßventile zwischen drei Betriebszuständen;
- Fig. 2: die Volllastkurven in einem Motorzustandsdiagramm des Drehmoments über der Motordrehzahl bei den drei Betriebszuständen des Einlaßventils gemäß Figur 1;
- Fig. 3: die Anordnung von einem ersten und einem zweiten Einlaßventil am Zylinder einer Brennkraftmaschine und die zugehörigen erfindungsgemäßen Betriebsarten der genannten Ventile;
- Fig. 4: die in einer Brennkraftmaschine gemäß Figur 3 bei einem erfindungsgemäßen Verfahren vorgenommene Motorsteuerung in dem Motorzustandsdiagramm des Drehmoments über der Drehzahl.

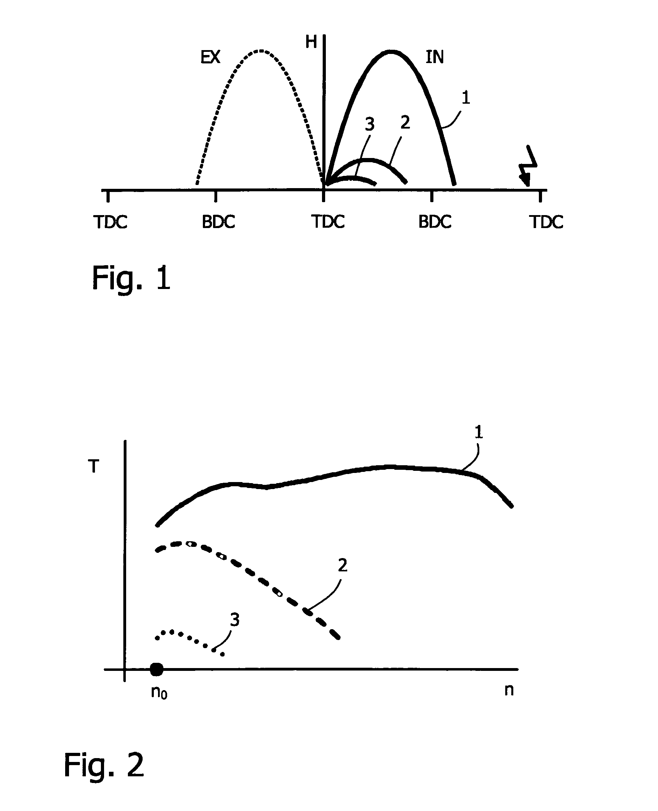

Figur 1 zeigt in einer Darstellung des Ventilhubs H (vertikale Achse) über dem Kurbelwellenwinkel (horizontale Achse) schematisch die Ventilprofile eines Auslaßventils EX und eines Einlaßventils IN. TDC bezeichnet dabei den oberen Totpunkt, BDC den unteren Totpunkt des Kolbens. Das vorliegend interessierende Einlaßventil IN wird mit einer zwischen drei Zuständen 1, 2, 3 umschaltbaren Ventilsteuereinrichtung betrieben, so daß drei unterschiedliche Ventilprofile bzw. Betriebsarten für das Einlaßventil IN möglich sind:
1: Maximalbetrieb bei Volllast, wobei die Ventilöffnungsdauer länger als der Ansaugtakt ist;
2: Zwischenbetrieb für mittlere Lasten, wobei die Ventilöffnungsdauer kürzer als der Ansaugtakt ist;
3: Minimalbetrieb für den Motorleerlauf mit einer sehr kurzen Öffnungsdauer und einem geringen maximalen Ventilhub.

Durch die verkürzte Ventilöffnungsdauer im Zwischenbetrieb 2 können die mit einer Drosselung des Motors normalerweise verbundenen Pumpverluste reduziert werden, da das Einlaßventil nur so lange geöffnet ist, wie für das Zuführen der erforderlichen Luftmenge erforderlich ist. Bei üblichen mechanischen Ventilsteuereinrichtungen wächst der maximale Ventilhub rasch mit der Ventilöffnungsdauer an, und bei hohen Lasten werden hohe Ventilhübe benötigt, um die Flußverluste und die damit verbundenen Füllverluste zu reduzieren.

Figur 2 zeigt in einem Motorzustandsdiagramm des Ausgangsdrehmoments T der Brennkraftmaschine über der Motordrehzahl n die drei Volllastkurven 1, 2 und 3, die sich bei Volllastbetrieb des Motors und den entsprechenden Ventilbetriebsarten 1, 2 und 3 gemäß Figur 1 einstellen. Aus der Darstellung wird erkennbar, daß mit einer Reduzierung des Ventilhubs und der Ventilöffnungsdauer auch die erreichbare Betriebsfläche in der Drehmoment/Drehzahl-Ebene abnimmt. Der Minimalbetrieb 3 des Einlaßventils ist dabei z. B. nur in einem kleinen Flächenbereich um die Leerlaufdrehzahl n₀ herum nutzbar. Der Zwischenbetrieb 2 des Einlaßventils liefert die größten Vorteile im Bereich mittlerer Motordrehzahlen und leichter Lasten. Der Maximalbetrieb 1 eröffnet dagegen das gesamte Betriebsfeld der Brennkraftmaschine, weist jedoch keine Vorteile hinsichtlich der Kraftstoffausnutzung auf.

Im Leerlauf wäre daher der Minimalbetrieb 3 des Einlaß ventils zu bevorzugen, wobei bei einer Betätigung des Gaspedals durch den Fahrer als Kommando für ein spontanes Beschleunigen ein schnelles Umschalten in den Zwischenbetrieb 2 oder, bei Anforderung einer besonders starken Beschleunigung, sogar in den Maximalbetrieb 3 erforderlich wäre. Eine solche Ventilsteuerung führt jedoch bei den üblicherweise verwendeten hydraulisch geschalteten Ventilsteuereinrichtungen zu Problemen, da im Leerlauf der verfügbare Motoröldruck typischerweise nicht ausreicht, um die Aktuatoren umzuschalten. Dieses Problem verschärft sich noch bei erhöhten Öltemperaturen, so daß ein ausreichender Motoröldruck zum Umschalten der Aktuatoren nur bei mittleren Motordrehzahlen verfügbar wird.

Ein zügiges Ansprechverhalten des Motors ausgehend von einer geringen Motorlast könnte prinzipiell durch eine sehr viel leistungsfähigere Ölpumpe gewährleistet werden. Dies würde jedoch die mit der variablen Ventilsteuerung erreichten Vorteile weitgehend wieder zunichte machen. Aus diesen Gründen besteht ein Bedarf für eine Motorsteuerung mit einer Ventilsteuereinrichtung, die zwischen (mindestens) zwei Betriebsarten der Einlaßventile (Minimalbetrieb, Maximalbetrieb) umschalten kann und eine gute Kraftstoffausnutzung gewährleistet.

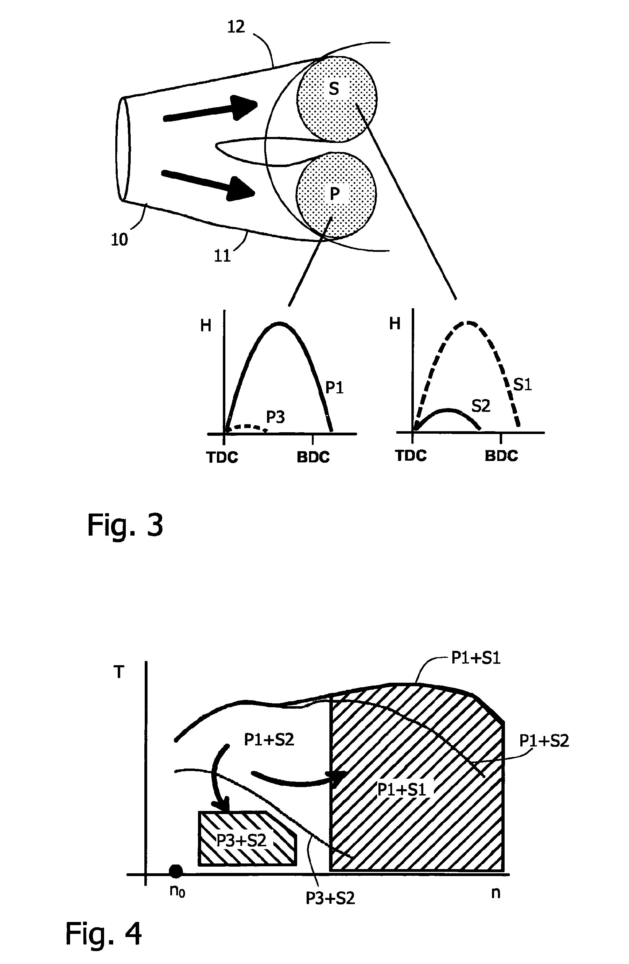

Diesbezüglich ist in Figur 3 die der erfindungsgemäßen Lösung zugrundeliegende Ventileinrichtung gezeigt. Im oberen Teil von Figur 3 ist ein Teil des Zylinderkopfes einer Brennkraftmaschine mit einem ersten Einlaßventil P und einem zweiten Einlaßventil S dargestellt. Den Einlaßventilen wird über einen Ansaugkrümmer 10 Frischluft zugeführt, wobei sich der Ansaugkrümmer 10 in einen primären Einlaßkanal 11 zum ersten Einlaßventil P und einen sekundären Einlaßkanal 12 zum zweiten Einlaßventil S aufteilt. Die Ausgestaltung der Kanäle und der Einlaßventile P, S ist vorzugsweise so, daß die über den sekundären Einlaßkanal 12 und das zweite Einlaßventil S zugeführte Luft für eine Wirbelbildung im Zylinder sorgt, so daß dort Luft und Kraftstoff gut gemischt werden.

Die beiden Einlaßventile P, S sollen unabhängig voneinander mit Hilfe des Motoröldruckes zwischen verschiedenen Betriebsarten umgeschaltet werden können. Im unteren Teil von Figur 3 sind diese Betriebsarten der beiden Einlaßventile P, S als Ventilprofile im Diagramm des Ventilhubs H über dem Kurbelwellenwinkel dargestellt. Demnach haben die beiden Einlaßventile P, S einen Maximalbetrieb P1 beziehungsweise S1 mit einem großen maximalen Ventilhub und einer langen Ventilöffnungsdauer. Insbesondere kann die Ventilöffnungsdauer länger als der Ansaugtakt der Brennkraftmaschine sein. Die Ventilprofile P1 und S1 der beiden Einlaßventile P, S sind ansonsten einander sehr ähnlich beziehungsweise identisch.

Darüber hinaus können die beiden Einlaßventile P, S noch jeweils in einem Minimalbetrieb P3 beziehungsweise S2 betrieben werden. Dabei haben sie sehr viel kleinere maximale Ventilhübe und kürzere Ventilöffnungsdauern als im Maximalbetrieb P1 beziehungsweise S1. Insbesondere ist die Ventilöffnungsdauer kürzer als der Ansaugtakt der Brennkraftmaschine.

Des Weiteren ist in Figur 3 angedeutet, daß
- im Minimalbetrieb P3 des ersten Einlaßventils P der maximale Ventilhub etwa nur ein Drittel des maximalen Ventilhubs des zweiten Einlaßventils S in dessen Minimalbetrieb S2 beträgt; und
- der maximale Ventilhub des zweiten Einlaßventils S in dessen Minimalbetrieb S2 etwa nur ein Drittel des maximalen Ventilhubs des ersten Einlaßventils P in dessen Maximalbetrieb P1 beträgt.

Figur 4 zeigt ein Motorzustandsdiagramm (entsprechend Figur 2) für die vorstehend in Bezug auf Figur 3 diskutierte Brennkraftmaschine beziehungsweise Ventilsteuerung. Die Möglichkeit, zwei Einlaßventile P, S einer Mehrventil-Brennkraftmaschine unabhängig zwischen verschiedenen Nockenprofilen umschalten zu können, bietet gegenüber dem System der Figuren 1 und 2 zusätzliche vorteilhafte Möglichkeiten:

Bei der Kombination eines Maximalbetriebs P1 des ersten Einlaßventils P mit einem Minimalbetrieb S2 des zweiten Einlaßventils S, kurz als "P1+S2" bezeichnet, ist das volle Drehmoment der Brennkraftmaschine in der unteren Hälfte des Drehzahlbereiches verfügbar, während bei höheren Drehzahlen erhebliche Einbußen an Drehmoment und Leistung auftreten. Der asymmetrische Minimal-/Maximalbetrieb der Einlaßventile ist jedoch hinsichtlich der Kraftstoffausnutzung indirekt noch von Vorteil, da hierdurch ein asymmetrischer Fluß der Einlaßluft mit Turbulenzen erzeugt wird, der eine schnelle und vollständige Verbrennung fördert. Dies wiederum macht den Motor tolerant gegenüber einer Verdünnung mit Frischluft (Magerverbrennung) oder Restgasen (Abgasrückführung, variable Nockenwellensteuerung), welche die Kraftstoffausnutzung verbessern.

Die genannte Kombination P1+S2 der Ventilbetriebsarten erfüllt daher (anders als alle Kombinationen der Profile 2 und 3 bei den Figuren 1 und 2) im unteren Drehzahlbereich alle Anforderungen hinsichtlich eines guten Drehmomentes, eines guten Beschleunigungs-Ansprechverhaltens und eines ausreichenden Öldruckes für die Ventilsteuereinrichtung. Gleichzeitig ergeben sich auch noch Vorteile hinsichtlich der Verbrennung und der Kraftstoffausnutzung (anders als etwa ein doppelter Maximalbetrieb P1+S1). Der Betriebsmodus P1+S2 eignet sich daher als ein Grundzustand beziehungsweise eine Standardeinstellung für den drucklosen Zustand, d.h., wenn die Ventilsteuereinrichtung keinen Motoröldruck anwendet. Der Grundzustand P1+S2 ist dann gleichzeitig ein "Auffangzustand" oder "Sicherheitszustand", da dieser bei einem Ausfall des Motoröldrucks (aus welchen Gründen auch immer) angenommen wird und eine ausreichende Fahrbarkeit des Kraftfahrzeuges bei günstiger Kraftstoffausnutzung gewährleistet.

Untersuchungen mit Kraftfahrzeugen zeigen, daß Vierzylinder-Ottomotoren mit Handschaltgetriebe überwiegend in einem Bereich der Motordrehzahl zwischen 1500 und 3000 U/min betrieben werden. Der Drehzahlbereich zwischen dem Leerlauf (ca. 700 U/min) und 1500 U/min wird dagegen nicht sehr häufig benötigt. Bei normalen Betriebsbedingungen, d.h. bei nicht überhöhter Öltemperatur, liegt der Öldruck bei 1500 U/min sehr viel höher als im Leerlauf und reicht aus, um die Aktuatoren einer Ventilsteuereinrichtung umzuschalten. Gemäß Figur 4 wird daher vorzugsweise das erste Einlaßventil P vom Maximalbetrieb P1 zum Minimalbetrieb P3 umgeschaltet, wenn die Motordrehzahl zwischen ca. 1500 und ca. 3000 U/min liegt und eine leichte bis mittlere Motorlast vorliegt. Das Gebiet dieses mit "P3+S2" bezeichneten Betriebsmodus kann ausgehend vom Grundzustand P1+S2 erreicht werden, indem nur eines der Einlaßventile (nämlich P) umgeschaltet wird.

Bei hohen Motordrehzahlen muß auch das zweite Einlaßventil S im Maximalbetrieb S1 eingesetzt werden, um ein Maximum an Frischluft bereitzustellen. Bei einer vorgegebenen mittleren Motordrehzahl schaltet die Ventilsteuereinrichtung daher das zweite Einlaßventil S in den Maximalbetrieb S1 um, das heißt, der Betriebsmodus wechselt von P1+S2 zu P1+S1. Bei der beschriebenen hydraulischen Ventilsteuereinrichtung erfolgt dieses Umschalten durch eine Druckbeaufschlagung der Einlaßnockenwelle für das zweite Einlaßventil S.

Gemäß Figur 4 werden somit drei Betriebsmodi unterschieden, nämlich der Grundzustand P1+S2 (ohne Motoröldruck erreichbar), der Leichtlast-Betriebszustand P3+S2 (erfordert Motoröldruck für das erste Einlaßventil P), sowie der Hochlast-Betriebsmodus P1+S1 (erfordert Motoröldruck für das zweite Einlaßventil S). Von Vorteil ist, daß in jedem Betriebsmodus maximal für eines der Einlaßventile die Anwendung eines Motoröldruckes erforderlich ist.

Weiterhin ist von besonderem Vorteil, daß die kontinuierlich durch das Motorzustandsdiagramm führenden Übergänge zwischen den genannten Betriebsmodi jeweils durch Umschalten nur eines der Einlaßventile vollzogen werden können. Die Übergänge zwischen den verschiedenen Betriebsmodi P3+S2 ⇔P1+S2 ⇔ P1+S1 erfordern nämlich im Allgemeinen nicht nur eine Umschaltung der Ventilsteuereinrichtung, sondern auch einen Sprung in der Drosselklappenposition und im Zündzeitpunkt, um über die Umstellung hinweg ein kontinuierliches, konstantes Drehmoment des Motors zu gewährleisten. Eine solche, verhältnismäßig schwierige Übergangssteuerung wird bei dem beschriebenen Verfahren dadurch erleichtert, daß jeweils nur das Umschalten eines einzigen Einlaßventils bei einem Wechsel der Betriebsmodi zu kompensieren ist.

Zusammengefaßt betrifft eine bevorzugte Ausführungsform der Erfindung somit ein Verfahren zum Betrieb einer Viertakt-Brennkraftmaschine mit zwei Einlaßventilen P, S pro Zylinder und einem entsprechenden primären Einlaßkanal 11 und sekundären Einlaßkanal 12, wobei jedes Einlaßventil P, S von einer unabhängigen Umschaltvorrichtung betrieben wird, die entweder ein höheres und längeres Ventilprofil oder ein kleineres und kürzeres Ventilprofil, das vollständig innerhalb des erstgenannten Ventilprofils liegt, bereitstellt. Das Umschalten zwischen den Ventilprofilen wird dabei durch Anwendung eines Motoröldruckes oberhalb eines Schwellwertes durch zwei unabhängige Ölsteuerventile für die ersten und zweiten Einlaßventile P, S einer Zylinderreihe erreicht. In einem drucklosen Grundzustand werden die ersten Einlaßventile P eines jeden Zylinders mit maximalem Ventilhub P1 und die zweiten Einlaßventile S mit einem minimalen Ventilhub S2 und einer kürzeren Ventilöffnungsdauer als die Ansaugtaktdauer betrieben. Bei einem geringen, für ein Umschalten nicht ausreichenden Motoröldruck wird auf diese Weise bei kleinen Motordrehzahlen ein volles Drehmoment durch die Bereitstellung einer vollen Ventilöffnungsdauer am ersten Einlaßventil ermöglicht, wobei gleichzeitig die Verbrennungseigenschaften durch die Erzeugung von Wirbeln aufgrund der verminderten Öffnung des zweiten Einlaßventils verbessert werden.

Der maximale Ventilhub im Minimalbetrieb S2 des zweiten Einlaßventils S ist vorzugsweise kleiner als der maximale Ventilhub des ersten Einlaßventils P in deßen Maximalbetrieb P1, so daß der überwiegende Anteil der Frischluftzufuhr über das erste Einlaßventil P stattfindet.

Bei typischen Betriebsbedingungen mit aufgewärmtem Motoröl, moderaten Motordrehzahlen und moderaten Motorlasten wird die Ventilsteuereinrichtung für die ersten Einlaßventile P mit Druck beaufschlagt, so daß letztere auf einen Minimalbetrieb P3 mit kleinem Ventilhub und kurzer Ventilöffnungsdauer umgeschaltet werden, welche beide kleiner sind als die entsprechenden Größen beim zweiten Einlaßventil S in dessen Minimalbetrieb S2. Das zweite Einlaßventil S bleibt dabei ohne Druckbeaufschlagung und somit im Minimalbetrieb S2. Die kurzen Ventilöffnungsdauern beider Einlaßventile P, S reduzieren die Pumpverluste bei dem Leichtlastbetrieb, und der asymmetrische Ventilhub sorgt für Wirbel und Turbulenzen im Zylinder, um eine effektive Verbrennung zu unterstützen.

Der maximale Ventilhub des ersten Einlaßventils P im Minimalbetrieb P3 beträgt vorzugsweise ein Drittel des maximalen Ventilhubs des zweiten Einlaßventils S in dessen Minimalbetrieb S2, so daß aufgrund des sehr viel höheren Flußwiderstandes am ersten Einlaßventil P der überwiegende Anteil der Einlaßluft durch das zweite Einlaßventil fließt.

Weiterhin wird bei typischen Betriebsbedingungen einer mittleren Motordrehzahl und mittleren Motorlast, jedoch einer erhöhten Motoröltemperatur und demgemäß einem reduzierten Motoröldruck, der für ein Umschalten der Ventilsteuereinrichtung nicht ausreicht, die Steuereinrichtung für beide Einlaßventile P, S drucklos gelassen und daher im Grundzustand P1+S2 betrieben. Hierdurch wird ein volles Motordrehmoment ermöglicht und gleichzeitig die Erhaltung des Öldruckes im Rest des Motors unterstützt.

Im Leerlauf beziehungsweise bei geringer Motordrehzahl ist der Motoröldruck typischerweise nicht ausreichend zum Umschalten der Ventilsteuereinrichtung, so daß sie ebenfalls drucklos bleibt und ein Betrieb im Grundzustand P1+S2 erfolgt, welcher die Verfügbarkeit eines vollen Motordrehmoments für ein Losfahren des Kraftfahrzeuges gewährleistet.

Bei mittleren bis hohen Motordrehzahlen ist der Motoröldruck immer ausreichend zum Umschalten der Ventilsteuereinrichtung, so daß die Aktuatoren für die zweiten Einlaßventile S mit Druck beaufschlagt werden können, um die zweiten Einlaßventile S im Maximalbetrieb (ähnlich dem Maximalbetrieb der ersten Einlaßventile P) einsetzen zu können. Auf diese Weise wird das volle Drehmoment und Leistungspotential der Brennkraftmaschine bei hoher Drehzahl verfügbar.

## Patentansprüche

1. Verfahren zum Betrieb einer Brennkraftmaschine mit einem ersten und einem zweiten Einlassventil (P, S) an einem Zylinder, welche unter Energiezufuhr unabhängig voneinander jeweils zwischen
a) einem Maximalbetrieb (P1, S1) mit größerem Ventilhub und/oder einer längeren Öffnungsdauer, und
b) einem Minimalbetrieb (P3, S2) mit kleinerem Ventilhub und/oder einer kürzeren Öffnungsdauer
umgeschaltet werden können,
**dadurch gekennzeichnet, dass** ohne Energiezufuhr ein Grundzustand (P1+S2)angenommen wird, in dem das erste Einlassventil (P) im Maximalbetrieb (P1) und das zweite Einlassventil (S) im Minimalbetrieb (S2) betrieben wird.

2. Verfahren nach Anspruch 1,
**dadurch gekennzeichnet, dass**
bei mittlerer Motordrehzahl und hoher Motorlast die Einlassventile (P, S) im Grundzustand (P1+S2) betrieben werden.

3. Verfahren nach Anspruch 2,
**dadurch gekennzeichnet, daß**
die Umschaltung der Einlaßventile (P, S) durch den Motoröldruck bewirkt wird, wobei bei geringem Motoröldruck die Einlaßventile (P, S) im Grundzustand (P1+S2) betrieben werden.

4. Verfahren nach mindestens einem der Ansprüche 1 bis 3,
**dadurch gekennzeichnet, daß**
bei mittlerer Motordrehzahl und Motorlast beide Einlaßventile (P, S) im Minimalbetrieb (P3+S2) betrieben werden.

5. Verfahren nach mindestens einem der Ansprüche 1 bis 4,
**dadurch gekennzeichnet, daß**
bei hoher Motordrehzahl und/oder hoher Motorlast beide Einlaßventile (P, S) im Maximalbetrieb (P1+S1) betrieben werden.

6. Verfahren nach mindestens einem der Ansprüche 1 bis 5,
**dadurch gekennzeichnet, daß**
beim Übergang zwischen zwei Betriebsmodi (P3+S2, P1+S2, P1+S1) jeweils nur eines der Einlaßventile (P, S) umgeschaltet wird.

7. Verfahren nach mindestens einem der Ansprüche 1 bis 6,
**dadurch gekennzeichnet, daß**
der Ventilhub und/oder die Ventilöffnungsdauer beim ersten Einlaßventil (P) im Minimalbetrieb (P3) kleiner sind als beim zweiten Einlaßventil (S) im Minimalbetrieb (S2).

8. Verfahren nach mindestens einem der Ansprüche 1 bis 7,
**dadurch gekennzeichnet, daß**
der Ventilhub des zweiten Einlaßventils (S) im Minimalbetrieb (S2) weniger als 40%, vorzugsweise weniger als 33% des Ventilhubs des ersten Einlaßventils (P) im Maximalbetrieb (P1) beträgt.

9. Brennkraftmaschine, enthaltend
a) mindestens einen Zylinder mit zwei Einlassventilen (P, S);
b) eine variable Ventilsteuereinrichtung, welche unter Energiezufuhr die genannten Einlassventile (P, S) unabhängig voneinander zwischen (a) einem Maximalbetrieb (P1, S1) mit größerem Ventilhub und/oder einer längeren Öffnungsdauer, und (b) einem Minimalbetrieb (P3, S2) mit kleinerem Ventilhub und/oder einer kürzeren Öffnungsdauer umschalten kann,
**gekennzeichnet durch**
c) eine Motorsteuerung, welche dahingehend ausgebildet ist, die Brennkraftmaschine gemäß einem Verfahren nach mindestens einem der Ansprüche 1 bis 8 zu betreiben.

10. Brennkraftmaschine nach Anspruch 9,
**dadurch gekennzeichnet, daß**
die Ventilsteuereinrichtung dazu eingerichtet ist, die Einlaßventile (P, S) durch wahlweise Beaufschlagung mit einem Motoröldruck umzuschalten.

## Claims

1. Method for operating an internal combustion engine having a first and a second inlet valve (P, S) on one cylinder, which can be changed over with energy being supplied, independently of one another in each case between
a) maximum operation (P1, S1) with a larger valve stroke and/or a longer opening duration, and
b) minimum operation (P3, S2) with a smaller valve stroke and/or a shorter opening duration,
**characterized in that** when energy is not being supplied a basic state (P1+S2) is assumed, in which the first inlet valve (P) is operated in maximum operation (P1) and the second inlet valve (S) in minimum operation (S2).

2. Method according to Claim 1, **characterized in that**, in the case of medium engine rotational speed and high engine load, the inlet valves (P, S) are operated in the basic state (P1 + S2).

3. Method according to Claim 2, **characterized in that** the changeover of the inlet valves (P, S) is brought about by the engine oil pressure, the inlet valves (P, S) being operated in the basic state (P1+S2) in the case of a low engine oil pressure.

4. Method according to at least one of Claims 1 to 3, **characterized in that**, in the case of medium engine rotational speed and engine load, both inlet valves (P, S) are operated in minimum operation (P3+S2).

5. Method according to at least one of Claims 1 to 4, **characterized in that**, in the case of a high engine rotational speed and/or high engine load, both inlet valves (P, S) are operated in maximum operation (P1+S1).

6. Method according to at least one of Claims 1 to 5, **characterized in that**, during the transition between two operating modes (P3+S2, P1+S2, P1+S1), in each case only one of the inlet valves (P, S) is changed over.

7. Method according to at least one of Claims 1 to 6, **characterized in that**, the valve stroke and/or the valve opening duration are/is smaller in the case of the first inlet valve (P) in minimum operation (P3) than in the case of the second inlet valve (S) in minimum operation (S2).

8. Method according to at least one of Claims 1 to 7, **characterized in that** the valve stroke of the second inlet valve (S) in minimum operation (S2) is less than 40%, preferably less than 33%, of the valve stroke of the first inlet valve (P) in maximum operation (P1).

9. Internal combustion engine, containing
a) at least one cylinder with two inlet valves (P, S);
b) a variable valve control device which can change over said inlet valves (P, S) with energy being supplied independently of one another between (a) maximum operation (P1, S1) with a larger valve stroke and/or a longer opening duration and (b) minimum operation (P3, S2) with a smaller valve stroke and/or a shorter opening duration,
**characterized by**
c) an engine control which is designed to operate the internal combustion engine according to a method according to at least one of Claims 1 to 8.

10. Internal combustion engine according to Claim 9, **characterized in that** the valve control device is set up to change over the inlet valves (P, S) by selective action upon them by an engine oil pressure.

## Revendications

1. Procédé pour faire fonctionner un moteur à combustion interne avec une première et une deuxième soupape d'admission (P, S) sur un cylindre, lesquelles peuvent être commutées par apport d'énergie indépendamment l'une de l'autre, à chaque fois entre
a) un mode de fonctionnement maximum (P1, S1) avec une plus grande levée de soupape et/ou une plus longue durée d'ouverture, et
b) un mode de fonctionnement minimum (P3, S2) avec une plus petite levée de soupape et/ou une plus courte durée d'ouverture,
**caractérisé en ce que**, sans apport d'énergie, on suppose un état de base (P1+S2), dans lequel la première soupape d'admission (P) fonctionne en mode de fonctionnement maximum (P1) et la deuxième soupape d'admission (S) fonctionne en mode de fonctionnement minimum (S2).

2. Procédé selon la revendication 1,
**caractérisé en ce que** pour un régime moyen du moteur et une grande charge du moteur, les soupapes d'admission (P, S) fonctionnent dans l'état de base (P1+S2).

3. Procédé selon la revendication 2,
**caractérisé en ce que**
la commutation des soupapes d'admission (P, S) est effectuée par la pression d'huile du moteur, et en cas de faible pression d'huile du moteur, les soupapes d'admission (P, S) fonctionnent dans l'état de base (P1+S2).

4. Procédé selon au moins l'une quelconque des revendications 1 à 3,
**caractérisé en ce que** dans le cas d'un régime moyen du moteur et d'une charge moyenne du moteur, les deux soupapes d'admission (P, S) fonctionnent en mode de fonctionnement minimum (P3+S2).

5. Procédé selon au moins l'une quelconque des revendications 1 à 4,
**caractérisé en ce que** dans le cas d'un régime élevé du moteur et/ou d'une charge du moteur élevée, les deux soupapes d'admission (P, S) fonctionnent en mode de fonctionnement maximum (P1+S1).

6. Procédé selon au moins l'une quelconque des revendications 1 à 5,
**caractérisé en ce que**
dans le cas d'un passage entre deux modes de fonctionnement (P3+S2, P1+S2, P1+S1), à chaque fois seulement l'une des soupapes d'admission (P, S) est commutée.

7. Procédé selon au moins l'une quelconque des revendications 1 à 6,
**caractérisé en ce que** la levée de la soupape et/ou la durée d'ouverture de la soupape dans le cas de la première soupape d'admission (P) en mode de fonctionnement minimum (P3) sont inférieures à celles de la deuxième soupape d'admission (S) en mode de fonctionnement minimum (S2).

8. Procédé selon au moins l'une quelconque des revendications 1 à 7,
**caractérisé en ce que** la levée de la soupape de la deuxième soupape d'admission (S) en mode de fonctionnement minimum (S2) vaut moins de 40 %, de préférence moins de 33 % de la levée de la soupape de la première soupape d'admission (P) en mode de fonctionnement maximum (P1).

9. Moteur à combustion interne, comprenant :
a) au moins un cylindre avec deux soupapes d'admission (P, S) ;
b) un dispositif de commande de soupape variable, qui, par apport d'énergie, peut commuter lesdites soupapes d'admission (P, S) indépendamment l'une de l'autre entre (a) un mode de fonctionnement maximum (P1, S1) avec une plus grande levée de soupape et/ou une plus longue durée d'ouverture, et (b) un mode de fonctionnement minimum, (P3, S2) avec une plus petite levée de soupape et/ou une plus courte durée d'ouverture,
**caractérisé par**
c) une commande de moteur qui est réalisée de manière à faire fonctionner le moteur à combustion interne selon un procédé selon au moins l'une quelconque des revendications 1 à 8.

10. Moteur à combustion interne selon la revendication 9,
**caractérisé en ce que** le dispositif de commande de soupape est prévu pour commuter les soupapes d'admission (P, S) par sollicitation sélective avec une pression d'huile du moteur.
